# EUROPÄISCHE PATENTSCHRIFT

(11) **EP 1 108 248 B1**
(45) Veröffentlichungstag und Bekanntmachung des Hinweises auf die Patenterteilung: **18.06.2003**
(21) Anmeldenummer: 99952422.6
(22) Anmeldetag: 17.08.1999
(51) Int. Cl.: G07F 7/08, G07F 19/00, G07F 17/16

(54) **VERFAHREN ZUM ERWERB ELEKTRONISCHER DATEN UNTER VERWENDUNG EINES DATENTRÄGERS UND ENTSPRECHENDER DATENTRÄGER**
METHOD FOR ACQUIRING ELECTRONIC DATA BY MEANS OF A DATA CARRIER AND CORRESPONDING DATA CARRIER
PROCEDE D'ACQUISITION DE DONNEES ELECTRONIQUES AU MOYEN D'UN SUPPORT DE DONNEES, ET SUPPORT DE DONNEES CORRESPONDANT

(30) Priorität: 27.08.1998 DE 19839099
(43) Veröffentlichungstag der Anmeldung: 20.06.2001
(73) Patentinhaber: Infineon Technologies AG, 81669 München (DE)
(72) Erfinder: BORN, Christine, D-85521 Ottobrunn (DE)
(74) Vertreter: Hermann, Uwe, Dipl.-Ing.
(86) Internationale Anmeldenummer: DE9902570
(87) Internationale Veröffentlichungsnummer: WO00013150

(56) Entgegenhaltungen:
- EP-A- 0 535 630
- EP-A- 0 722 154
- PATENT ABSTRACTS OF JAPAN vol. 1997, no. 05, 30. Mai 1997 (1997-05-30) & JP 09 026992 A (HITACHI LTD), 28. Januar 1997 (1997-01-28) & US 5 845 262 A (NOZUE ET.AL.) 1. Dezember 1998 (1998-12-01)

## Beschreibung

Verfahren zum Erwerb elektronischer Daten unter Verwendung eines Datenträgers und entsprechender Datenträger

Die Erfindung betrifft ein Verfahren zum Erwerb elektronischer Daten unter Verwendung eines Datenträgers sowie einen entsprechenden Datenträger.

In der EP 0 681 298 A2 ist ein beschreibbarer Datenträger beschrieben, der an einem Verkaufspunkt mit digitalen Daten aus einem Computerspeicher beschrieben wird. Der Datenträger enthält einen programmierbaren Flash-Speicher zum Speichern der Daten. Bei den gespeicherten digitalen Daten handelt es sich um Computerspiele, die auch wieder gelöscht werden können, so daß ein neues Computerspiel auf dem Datenträger gespeichert werden kann.

Weiterhin sind Datenträger bekannt, die zur Durchführung von Zahlungstransaktionen dienen. Weit verbreitet sind beispielsweise kartenförmige Datenträger mit Magnetstreifen oder Speicherchip als Speichermedium. Insbesondere letztere werden zunehmend als elektronische Geldbörse oder als Kreditkarte eingesetzt.

Bisher werden Einkäufe von Waren mittels elektronischer Zahlungsmittel durch eine Zahlungstransaktion und eine zusätzlich dazu durchgeführte Übergabe der erworbenen Ware durchgeführt. Dies gilt auch für den Eingangs erwähnten Erwerb elektronischer Daten. Das bedeutet, daß der Kaufpreis für die zu erwerbenden elektronischen Daten in der EP 0 681 298 A2 beispielsweise durch Barzahlung oder durch Verwendung einer elektronischen Geldbörse oder Kreditkarte erfolgen kann.

Der Erfindung liegt die Aufgabe zugrunde, ein Verfahren zum Erwerb elektronischer Daten unter Verwendung eines Datenträgers anzugeben, bei dem der zugehörige Zahlungsvorgang mit nur geringem technischem Aufwand erfolgen kann. Weiterhin ist es Aufgabe der Erfindung, einen entsprechenden Datenträger anzugeben.

Diese Aufgabe wird mit einem Verfahren gemäß Patentanspruch 1 und einem Datenträger gemäß Patentanspruch 3 gelöst. Vorteilhafte Aus- und Weiterbildungen der Erfindung sind Gegenstand abhängiger Ansprüche.

Das erfindungsgemäße Verfahren wird unter Verwendung eines Datenträgers durchgeführt, der eine Verarbeitungseinheit und einen Datenspeicher aufweist. Der Datenträger wird mit einer Abrechnungseinrichtung verbunden und zwischen der Verarbeitungseinheit des Datenträgers und der Abrechnungseinrichtung werden Informationen betreffend einen im Zusammenhang mit dem Erwerb der elektronischen Daten abzuwickelnden Zahlungsvorgang übertragen, wodurch ein Kaufpreis für die zu erwerbenden Daten entrichtet wird. Außerdem wird der Datenträger mit einem externen Datenspeicher verbunden, in dem die zu erwerbenden Daten gespeichert sind. Die Daten werden vom externen Datenspeicher zum Datenträger übertragen und in dessen Datenspeicher gespeichert.

Der erfindungsgemäße Datenträger dient zur Verwendung als elektronischer Einkaufswagen und weist eine Verarbeitungseinheit zur Abwicklung eines elektronischen Zahlungsvorganges mittels des Datenträgers auf, einen ersten Datenspeicher zum Speichern von für die Abwicklung eines Zahlungsvorganges durch die Verarbeitungseinheit benötigten Informationen sowie einen beschreibbaren zweiten Datenspeicher zum Speichern von durch einen von der Verarbeitungseinheit abgewickelten Zahlungsvorgang erworbenen Daten.

Die Erfindung sieht also vor, das Durchführen des Zahlungsvorganges sowie das Speichern der erworbenen Daten mittels eines einzelnen Datenträgers durchzuführen. Bisher war es üblich, für den Zahlungsvorgang und das Speichern der Daten unterschiedliche Datenträger vorzusehen. Somit ergibt sich durch die Erfindung ein verminderter Hardwareaufwand für die Durchführung derselben Aufgaben.

Der Datenträger kann beispielsweise die Funktion einer elektronischen Geldbörse haben. Dann wird der Zahlungsvorgang durch Reduzierung von im ersten Datenspeicher gespeicherten Werteinheiten abgewickelt. Alternativ kann der Datenträger die Funktion einer Kreditkarte haben. Zur Abwicklung des Zahlungsvorganges durch die Verarbeitungseinheit wird dann eine im ersten Datenspeicher gespeicherte Kreditkartenummer über einen Ausgang des Datenträgers während des Zahlungsvorganges ausgegeben.

Besonders günstig ist es, wenn der Datenträger eine Chipkarte ist und sein zweiter Datenspeicher ein integrierter Speicher mit einer Speicherkapazität von wenigstens ein Megabyte ist. Der Speicher kann dann beispielsweise ein Flash-Speicher sein. Bisherige Chipkarten mit Zahlungsfunktion weisen keinerlei Datenspeicher zum Speichern erworbener Daten auf. Die bislang auf derartigen Chipkarten vorhandenen Datenspeicher dienen lediglich dem Speichern sehr geringer Datenmengen und haben eine entsprechend geringe Speicherkapazität, da in ihnen nur zur Abwicklung des Zahlungsvorganges notwendige Daten gespeichert werden müssen. Dies sind beispielsweise die Werteinheiten im Falle elektronischer Geldbörsen oder die Kreditkartennummer im Falle elektronischer Kreditkarten. Bei den zu erwerbenden elektronischen Daten kann es sich beispielsweise um Audio- und/oder Videodaten handeln. Derartige Daten erfordern in der Regel eine Speicherkapazität von mindestens einem Megabyte.

Die Erfindung wird im folgenden anhand der beiden Figuren näher erläutert, die verschiedene Ausführungsbeispiele zeigen.

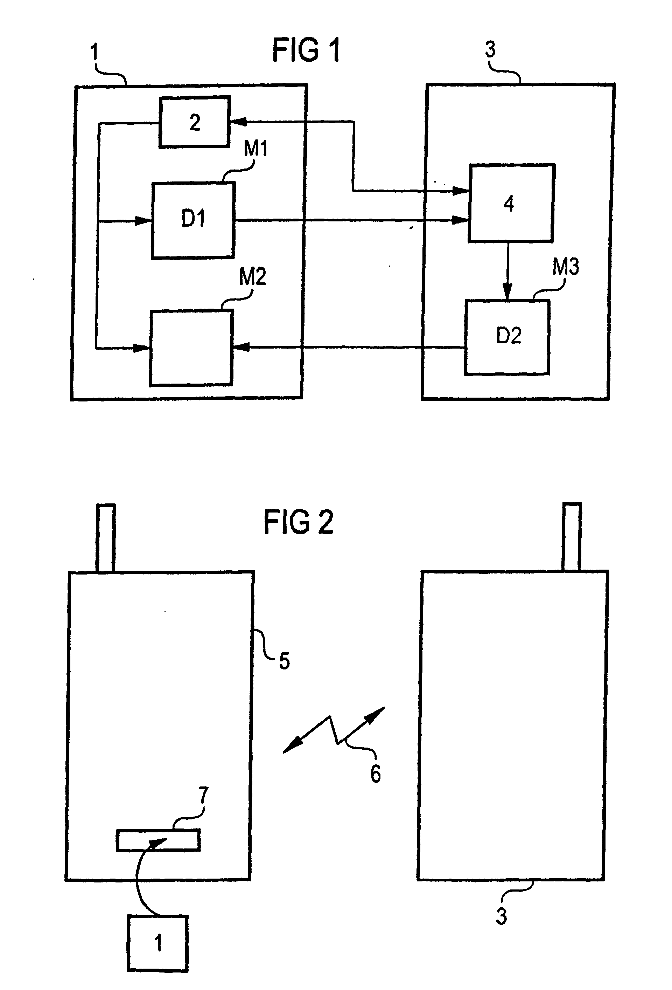

Figur 1 ist ein erfindungsgemäßer Datenträger 1 in Form einer Chipkarte zu entnehmen, der eine Verarbeitungseinheit 2, einen ersten Datenspeicher M1 und einen zweiten Datenspeicher M2 aufweist.

Die Verarbeitungseinheit 2 dient zur Abwicklung eines elektronischen Zahlungsvorganges mittels des Datenträgers 1. Der erste Datenspeicher M1 dient zum Speichern von für die Abwicklung eines Zahlungsvorganges durch die Verarbeitungseinheit 2 benötigten Informationen D1. Der zweite Datenspeicher M2 ist beschreibbar und dient zum Speichern von durch einen von der Verarbeitungseinheit 2 abgewickelten Zahlungsvorgang erworbenen Daten D2. Der Datenträger 1 dient zur Verwendung als elektronischer Einkaufswagen, das heißt die erworbenen Daten D2 werden auf ihm gespeichert, nämlich in seinem zweiten Datenspeicher M2.

Gemäß Figur 1 wird bei diesem Ausführungsbeispiel zum Erwerb der elektronischen Daten D2 der Datenträger 1 mit einer Abrechnungseinrichtung 3 verbunden, die sich in einem Kaufhaus befindet. Die Verbindung zwischen dem Datenträger 1 und der Abrechnungseinrichtung 3 kann dabei kontaktlos über entsprechende Sendeeinrichtungen oder kontaktbehaftet dadurch erfolgen, daß der Datenträger 1 in eine entsprechende Aufnahme der Abrechnungseinrichtung 3 eingeführt wird.

Die Abrechnungseinrichtung 3 weist ebenfalls eine Verarbeitungseinheit 4 auf sowie einen externen Datenspeicher M3. Im externen Datenspeicher M3 sind die zu erwerbenden elektronischen Daten D2 gespeichert. Der Kauf der elektronischen Daten D2 erfolgt einerseits durch die Abwicklung des Zahlungsvorganges und andererseits durch Übertragen der Daten D2 vom externen Datenspeicher M3 der Abrechnungseinrichtung 3 zum zweiten Datenspeicher M2 des Datenträgers 1. Dabei erfolgt die Übertragung der Daten D2 vorzugsweise erst nach der Abwicklung des Zahlungsvorganges. Die Abwicklung des Zahlungsvorganges erfolgt durch Kommunikation zwischen der Verarbeitungseinheit 2 des Datenträgers 1 und der Verarbeitungseinheit 4 der Abrechnungseinrichtung 3. Dabei greift die Verarbeitungseinheit 2 des Datenträgers 1 auf die im ersten Datenspeicher M1 gespeicherten Daten D1 zurück. Bei einer ersten Ausführungsform des Datenträgers hat dieser die Funktion einer elektronischen Geldbörse. Dann handelt es sich bei den im ersten Datenspeicher M1 gespeicherten Daten D1 um einem Geldbetrag entsprechende Werteinheiten. Die Verarbeitungseinheit 4 der Abrechnungseinrichtung 3 übermittelt an die Verarbeitungseinheit 2 des Datenträgers 1 den Kaufpreis für die zu erwerbenden elektronischen Daten D2. Anschließend reduziert die Verarbeitungseinheit 2 des Datenträgers 1 die im ersten Datenspeicher M1 gespeicherten Werteinheiten um einen entsprechenden Betrag und übermittelt gegebenenfalls ein entsprechendes Bestätigungssignal zurück an die Abrechnungseinrichtung 3. Bei einer zweiten Ausführungsform des Datenträgers 1 hat dieser die Funktion einer elektronischen Kreditkarte. Dann enthalten die in seinem ersten Datenspeicher M1 gespeicherten Daten D1 eine Kreditkartennummer. Zur Abwicklung des Zahlungsvorganges übermittelt die Verarbeitungseinheit 2 des Datenträgers 1 diese Kreditkartennummer an die Verarbeitungseinheit 4 der Abrechnungseinrichtung 3.

Figur 2 zeigt ein zweites Ausführungsbeispiel der Erfindung, bei dem die Verbindung zwischen dem Datenträger 1, der wiederum eine Chipkarte ist, und der Abrechnungseinrichtung 3 mittels eines Mobilfunknetzes 6 erfolgt. Der Datenträger 1 wird in einen Aufnahmeschlitz 7 eines Mobiltelefones 5 eingeführt. Anschließend erfolgt über das Mobiltelefon 5 die Aufgabe einer Bestellung für die gewünschten elektronischen Daten D2. Diese Bestellung wird an die Abrechnungseinrichtung 3 übermittelt. Im Anschluß daran erfolgt die Abwicklung des Zahlungsvorganges und die Übertragung der zu erwerbenden elektronischen Daten D2 auf anhand Figur 1 bereits beschriebene Weise über das Mobilfunknetz 6.

Das Ausführungsbeispiel in Figur 2 ermöglicht die Bezahlung und den Erwerb elektronischer Daten über beliebige Entfernungen. Zusätzlich zur Zahlungsfunktion und zur Funktion als Datenspeicher für die erworbenen elektronischen Daten D2 kann der Datenträger 1 beim Ausführungsbeispiel gemäß Figur 2 auch eine Autorisierungsfunktion für die Benutzung des Mobiltelefons 5 beziehungsweise des Mobilfunknetzes 6 haben. Dafür ist ein weiterer Datenspeicher auf dem Datenträger 1 notwendig, in dem ein entsprechender Berechtigungs-Code gespeichert ist. Der Datenträger 1 vereinigt dann zusätzlich die Funktion der bislang für den Betrieb von Mobiltelefonen üblichen SIM-Karten mit seinen bereits erläuterten Funktionen.

Nach dem Erwerb der elektronischen Daten D2 durch Speichern im zweiten Datenspeicher M2 können diese problemlos transportiert werden, indem der Datenträger 1 in entsprechende Lesegeräte eingeführt wird.

Statt über den anhand Figur 2 erläuterten dezentral durchgeführten Erwerb der Daten D2 mittels eines Mobiltelefons kann der Erwerb auch mittels eines mit dem Datenträger 1 zu verbindenden Computers durchgeführt werden. Dieser wird mit der Abrechnungseinrichtung 3 beispielsweise über das Internet verbunden.

## Patentansprüche

1. Verfahren zum Erwerb elektronischer Daten (D2) unter Verwendung eines Datenträgers (1), der eine Verarbeitungseinheit (2) und einen Datenspeicher (M2) aufweist, mit folgenden Schritten:
- der Datenträger (1) wird mit einer Abrechnungseinrichtung (3) verbunden,
- zwischen der Verarbeitungseinheit (2) des Datenträgers (1) und der Abrechnungseinrichtung (3) werden Informationen (D1) betreffend einen im Zusammenhang mit dem Erwerb der Daten (D2) abzuwickelnden Zahlungsvorgang übertragen, wodurch ein Kaufpreis für die zu erwerbenden Daten entrichtet wird,
- der Datenträger (1) wird mit einem externen Datenspeicher (M3) verbunden, in dem die zu erwerbenden Daten (D2) gespeichert sind,
- und die Daten (D2) werden vom externen Datenspeicher (M3) zum Datenträger (1) übertragen und in dessen Datenspeicher (M2) gespeichert.

2. Verfahren nach Anspruch 1,
bei dem der Datenträger (1) an ein Mobiltelefon (5) angeschlossen wird
und bei dem die Verbindung zwischen dem Datenträger (1) und der Abrechnungseinrichtung (3) bzw. dem externen Datenspeicher (M3) über das Mobiltelefon (5) und ein entsprechendes Mobilfunknetz (6) hergestellt wird.

3. Datenträger (1) zur Verwendung als elektronischer Einkaufswagen
- mit einer Verarbeitungseinheit (2) zur Abwicklung eines elektronischen Zahlungsvorganges mittels des Datenträgers (1),
- mit einem ersten Datenspeicher (M1) zum Speichern von für die Abwicklung eines Zahlungsvorganges durch die Verarbeitungseinheit (2) benötigten Informationen (D1)
- und mit einem beschreibbaren zweiten Datenspeicher (M2) zum Speichern von durch einen von der Verarbeitungseinheit (2) abgewickelten Zahlungsvorgang erworbenen Daten (D2).

4. Datenträger nach Anspruch 3,
dessen erster Datenspeicher (M1) zum Speichern von Werteinheiten dient, die bei einem durch die Verarbeitungseinheit (2) abgewickelten Zahlungsvorgang reduziert werden.

5. Datenträger nach Anspruch 3,
dessen erster Datenspeicher (M1) zum Speichern einer Kreditkartennummer dient, die während eines Zahlungsvorganges von der Verarbeitungseinheit (2) über einen Ausgang des Datenträgers (1) ausgegeben wird.

6. Datenträger nach einem der Ansprüche 3 bis 5,
der eine Chipkarte ist und dessen zweiter Datenspeicher (M2) ein integrierter Speicher mit einer Speicherkapazität von wenigstens 1 MByte ist.

## Claims

1. Method for acquiring electronic data (D2) using a data medium (1) which has a processing unit (2) and a data memory (M2), having the following steps:
- the data medium (1) is connected to a charging device (3),
- information (D1) relating to a payment operation which is to be performed in connection with the acquisition of the data (D2) is transferred between the processing unit (2) of the data medium (1) and the charging device (3), as a result of which a purchase price for the data which are to be acquired is paid,
- the data medium (1) is connected to an external data memory (M3) in which the data (D2) to be acquired are stored,
- and the data (D2) are transferred from the external data memory (M3) to the data medium (1) and are stored in the latter's data memory (M2).

2. Method according to Claim 1,
in which the data medium (1) is connected to a mobile telephone (5),
and in which the connection between the data medium (1) and the charging device (3) or the external data memory (M3) is set up via the mobile telephone (5) and an appropriate mobile radio network (6).

3. Data medium (1) for use as an electronic shopping cart,
- having a processing unit (2) for performing an electronic payment operation using the data medium (1),
- having a first data memory (M1) for storing information (D1) which the processing unit (2) requires for performing a payment operation,
- and having a writable second data memory (M2) for storing data (D2) which have been acquired by means of a payment operation performed by the processing unit (2).

4. Data medium according to Claim 3,
whose first data memory (M1) is used for storing value units which are reduced when a payment operation is performed by the processing unit (2).

5. Data medium according to Claim 3,
whose first data memory (M1) is used for storing a credit card number which the processing unit (2) outputs via an output of the data medium (1) during a payment operation.

6. Data medium according to one of Claims 3 to 5, which is a smart card and whose second data memory (M2) is an integrated memory having a memory capacity of at least 1 MByte.

## Revendications

1. Procédé pour l'acquisition de données électroniques (D2) en utilisant un support de données (1) qui comporte une unité de traitement (2) et une mémoire de données (M2), avec les étapes suivantes :
- le support de données (1) est relié à un dispositif de facturation (3),
- des informations (D1) concernant une opération de paiement à développer en relation avec l'acquisition des données (D2) sont transmises entre l'unité de traitement (2) du support de données (1) et le dispositif de facturation (3), ce qui fait qu'un prix d'achat est payé pour les données à acquérir,
- le support de données (1) est relié à une mémoire de données externe (M3) dans laquelle les données à acquérir (D2) sont mémorisées,
- et les données (D2) sont transmises de la mémoire de données externe (M3) au support de données (1) et sont mémorisées dans la mémoire de données (M2) de ce dernier.

2. Procédé selon la revendication 1,
dans lequel on raccorde le support de données (1) à un téléphone mobile (5)
et dans lequel on établit la liaison entre le support de données (1) et le dispositif de facturation (3) ou la mémoire de données externe (M3) par l'intermédiaire du téléphone mobile (5) et d'un réseau de radiocommunication mobile (6) correspondant.

3. Support de données (1) utilisé comme caddie électronique
- avec une unité de traitement (2) pour le développement d'une opération de paiement électronique au moyen du support de données (1),
- avec une première mémoire de données (M1) pour la mémorisation d'informations (D1) nécessaires au développement d'une opération de paiement par l'unité de traitement (2)
- et avec une deuxième mémoire de données (M2), dans laquelle on peut écrire, pour la mémorisation de données (D2) acquises par une opération de paiement développée par l'unité de traitement (2).

4. Support de données selon la revendication 3,
dont la première mémoire de données (M1) sert à la mémorisation d'unités de valeur qui sont diminuées lors d'une opération de paiement développée par l'unité de traitement (2).

5. Support de données selon la revendication 3,
dont la première mémoire de données (M1) sert à la mémorisation d'un numéro de carte de crédit qui est délivré par l'unité de traitement (2) par l'intermédiaire d'une sortie du support de données (1) pendant une opération de paiement.

6. Support de données selon l'une des revendications 3 à 5,
qui est une carte à puce et dont la deuxième mémoire de données (M2) est une mémoire intégrée d'une capacité de mémorisation d'au moins 1 mégaoctet.
